# EUROPEAN PATENT APPLICATION

(11) **EP 2 375 366 A1**
(43) Date of publication of application: **12.10.2011**
(21) Application number: 10159597.3
(22) Date of filing: 12.04.2010
(51) Int. Cl.: G06Q 10/00

(54) **Predicting meeting attendance**

(71) Applicant: Research In Motion Limited, Waterloo, ON N2L 3W8 (CA)
(72) Inventor: Walker, David Ryan, Waterloo Ontario N2L 3W8 (CA); Owen, Russell N., Waterloo Ontario N2K 4B8 (CA); Legg, Daniel James, Waterloo Ontario N2L 3W8 (CA); Dean, Edward Michael, Waterloo Ontario N2L 5Z5 (CA); Pasquero, Jerome, Waterloo Ontario N2L 3W8 (CA); Rose, Scott Douglas, Waterloo Ontario N2L 3W8 (CA)
(74) Representative: Patel, Binesh

(57) **Abstract**

Described is a method of configuring a meeting event stored on an organizing device. The meeting event comprises a meeting event location, a meeting event start time and a meeting event end time. The method comprises receiving prediction information for at least one meeting participant from at least one participant device, the prediction information for predicting attendance at the meeting event; and, in response to receiving prediction information for the at least one meeting participant, selectively altering one of the meeting event location, the meeting event start time and the meeting event end time.

## Description

### Field

The present matter relates to communication devices, and more particularly to a method of predicting the arrival time of a plurality of participants at a meeting event.

### Background

Communication devices including mobile devices and stationary computers are commonly used to manage and organize meeting events. For example a mobile device may have a Personal Information Manager that assists in organizing meetings between at least two participants. Meetings can be organized by sending email requests or other types of message requests from one device to one or more meeting attendees (or prospective meeting attendees). The requests may include a meeting invitation.

### Brief Description of the Drawings

In order that the subject matter may be readily understood, embodiments are illustrated by way of examples in the accompanying drawings, in which:
**Figure 1** is a block diagram illustrating a communication network;
**Figure 2** is a block diagram illustrating components of a mobile device;
**Figure 3** is a block diagram illustrating an organizing device in communication with three participant devices;
**Figure 4** is a block diagram illustrating a meeting event request; and
**Figure 5** is a flowchart depicting the method of configuring a meeting event on an organizing device.

### Detailed Description

Described is a computer implemented method of configuring a meeting event stored on an organizing device, the meeting event comprising a meeting event location, a meeting event start time and a meeting event end time, the method comprising: receiving prediction information for at least one meeting participant from at least one participant device, the prediction information for predicting attendance at the meeting event; and, in response to receiving prediction information for the at least one meeting participant, selectively altering one of the meeting event location, the meeting event start time and the meeting event end time.

Also descried is a communication device comprising a processor and a memory coupled thereto and a communication sub-system, coupled to the processor, for communicating with at least one participant device, the memory storing a meeting event, the meeting event comprising a meeting event location, a meeting event start time and a meeting event end time, the memory storing instructions and data for execution by the processor to configure the device to: receive prediction information for at least one participant from at least one participant device, the prediction information for predicting attendance at the meeting event; and, selectively alter one of the meeting event location, the meeting event start time and the meeting event end time in response to receiving prediction information for the least one participant.

Also described is a participant device comprising a processor and a memory coupled thereto and a communication sub-system, coupled to the processor, for communicating with at least one organizing device, the memory storing instructions and data for execution by the processor to configure the device to: receive a meeting event request for a meeting event having a meeting event start time and a meeting event location; determine prediction information of a participant of the meeting event based on the meeting event start time and the meeting event location, the prediction information for predicting attendance at the meeting event; and, communicate the prediction information to the organizing device.

Also described is a computer program product having computer readable code embodied therein, for execution by a processor for configuring a communication device communicate with at least one participant device, the computer program product comprising instructions and data for configuring a processor of the communication device to: receive prediction information for at least on participant from at least one participant device, the prediction information for predicting attendance at a meeting event; and, in response to receiving prediction information for the least one participant, selectively alter the meeting event, the meeting event comprising a meeting event location, a meeting event start time and a meeting event end time.

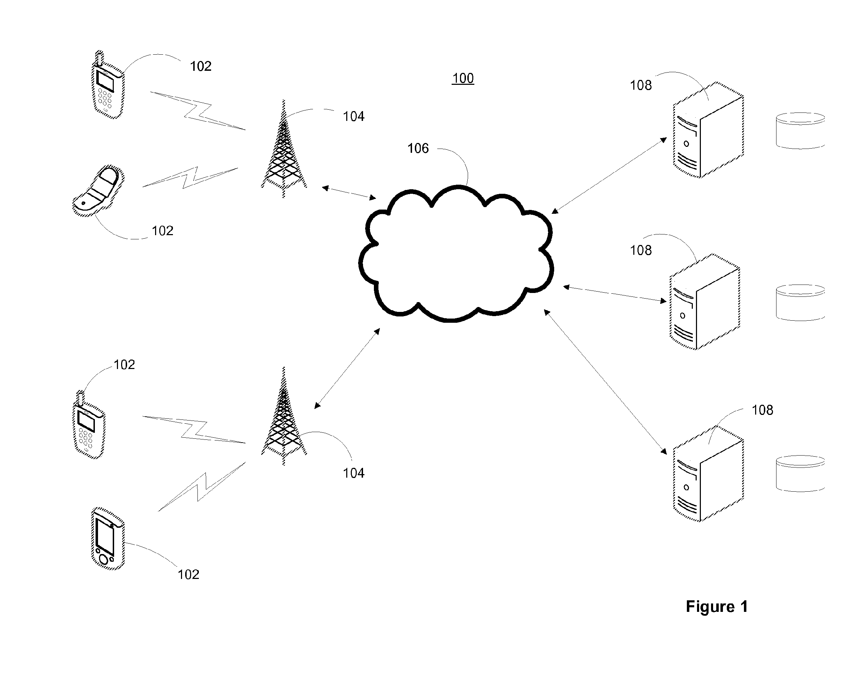

For convenience, like numerals in the description refer to like structures in the drawings. Referring to Figure 1, a typical telecommunication infrastructure is illustrated generally by numeral 100. The telecommunication infrastructure 100 includes a plurality of mobile devices 102, a plurality of base stations 104, a communication network 106 and a plurality of network servers 108.

The mobile devices 102 include wireless computing devices such as a smart phone, a personal digital assistant (PDA), and the like. The mobile devices 102 are in communication with one of the base stations 104. The base stations relay data between the mobile devices 102 and the network servers 108 via the communication network 106. Accordingly, the communication network 106 may include several components such as a wireless network, a relay, a corporate server and/or a mobile data server for relaying data between the base stations 104 and the network servers 108.

The network servers 108 include servers such as a Web server, an application server 108, and an application server with web services. It will be appreciated by a person of ordinary skill in the art that the telecommunication infrastructure 100 described herein is exemplary and that changes may be made to one or more components to accommodate different network configurations without affecting the scope of the aspects described herein.

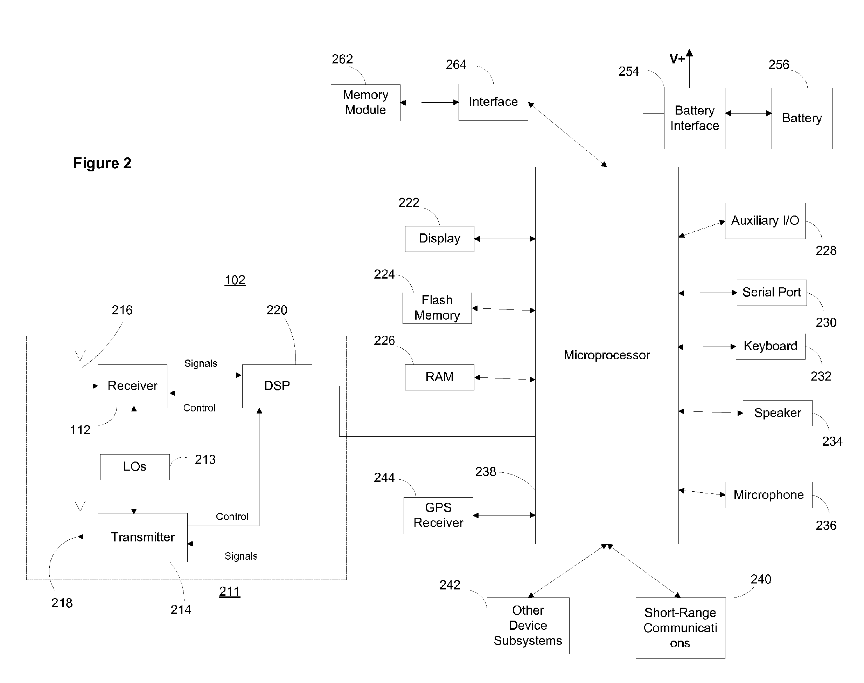

Referring to Figure 2, a typical mobile device 102 is illustrated in greater detail. The mobile device 102 is often a two-way communication device having both voice and data communication capabilities, including the capability to communicate with other computer systems. Depending on the functionality provided by the mobile device 102, it may be referred to as a data messaging device, a two-way pager, a cellular telephone with data messaging capabilities, a wireless Internet appliance, or a data communication device.

The mobile device 102 includes a communication subsystem 211, which includes a receiver 212, a transmitter 214, and associated components, such as one or more embedded or internal antenna elements 216 and 218, local oscillators (LOs) 213, and a processing module such as a digital signal processor (DSP) 220. As will be apparent to those skilled in field of communications, the particular design of the communication subsystem 211 depends on the communication network in which mobile device 102 is intended to operate.

The mobile device 102 includes a microprocessor 238, which controls general operation of the mobile device 102. The microprocessor 238 also interacts with additional device subsystems such as a display 222, a flash memory 224, a random access memory (RAM) 226, auxiliary input/output (I/O) subsystems 228, a serial port 230, a keyboard 232, a speaker 234, a microphone 236, a short-range communications subsystem 240 such as Bluetooth^{TM} for example, and any other device subsystems or peripheral devices generally designated at 242. The mobile device 102 may also include a positioning device 244, such as a GPS receiver, for receiving positioning information.

Operating system software used by the microprocessor 238 may be stored in a persistent store such as the flash memory 224, which may alternatively be a read-only memory (ROM) or similar storage element (not shown). Those skilled in the art will appreciate that the operating system, specific device applications, or parts thereof, may be temporarily loaded into a volatile store such as RAM 226.

The microprocessor 238, in addition to its operating system functions, enables execution of software applications on the mobile device 102. A predetermined set of applications, which control basic device operations, is installed on the mobile device 102 during its manufacture. These basic operations typically include data and voice communication applications, for example. Additionally, applications may also be loaded onto the mobile device 102 through the network 106, an auxiliary I/O subsystem 228, serial port 230, short-range communications subsystem 240, or any other suitable subsystem 242, and installed by a user in RAM 226, or the persistent store 224, for execution by the microprocessor 238. Such flexibility in application installation increases the functionality of the mobile device 102 and may provide enhanced on-device features, communication-related features, or both.

The display 222 is used to visually present an application's graphical user interface (GUI) to the user. The user can manipulate application data by modifying information on the GUI using an input device such as the keyboard 232 for example. Depending on the type of mobile device 102, the user may have access to other types of input devices, such as, for example, a scroll wheel, trackball, light pen or touch sensitive screen.

Location-based applications executing on the mobile device 102 may use positioning information from the positioning device 244 to provide relevant information to the user, often in real-time. The positioning device 244 may be a GPS receiver for receiving satellite broadcasts. In one embodiment, the satellite broadcast data is used by the mobile device 102 to determine its position. In another embodiment, the satellite broadcast data is transmitted from the mobile device 102 to one of the network servers 108 to determine the position of the mobile device 102.

Alternatively, the positioning device 244 may be a positioning module for receiving positioning information from one of the network servers 108. In this embodiment, the positioning module may comprise a software, rather than a hardware, solution.

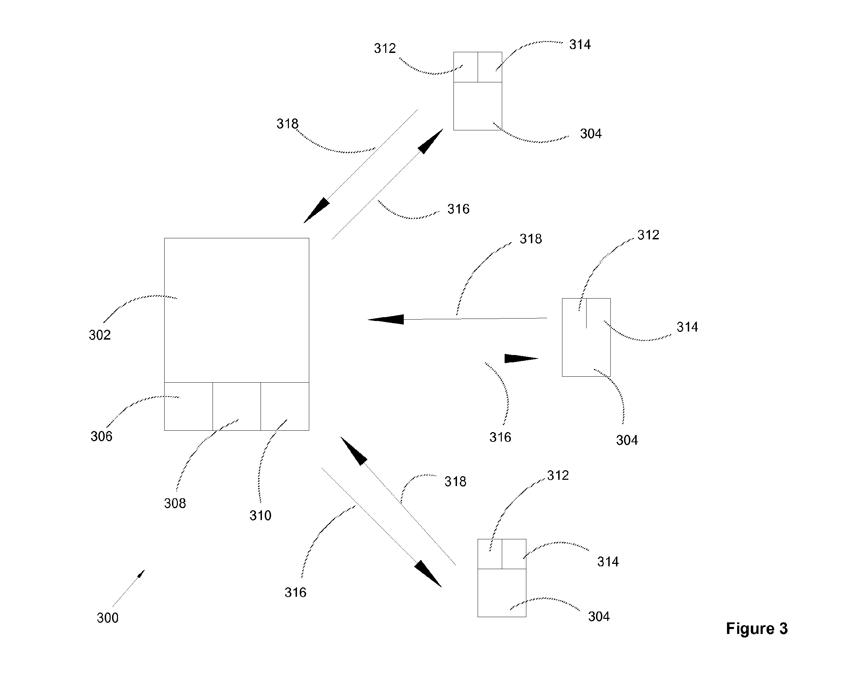

Referring to Figure 3, a block diagram 300 shows an organizing device 302 in communication over a network with one or more (e.g. three) participant devices 304. The network may be a wireless network, for example. The organizing device 302 may have memory 306 and a processor 308. The memory 306 may store data and/or instructions for execution by the processor 308. The organizing device 302 may further comprise a user interface 310, which may include a display. The organizing device 302 may be, for example, a mobile device or a stationary device.

The participant devices 304 may each have an estimated time of arrival (ETA) agent 312 and a GPS module 314, each associated with the participant devices 304. Also, each participant device 304 has memory for storing data and/or instructions and a processor for executing the instructions stored on memory. The participant devices 304 are mobile devices.

The GPS module 314 monitors the geospatial location of the participant device 304 using a GPS receiver. The GPS module 314 may be attached to or associated with the participant device 304. Alternatively, the GPS module 314 may be remote from the participant device 304 and may be in communication with the participant device 304. For example, the GPS module 314 could periodically communicate positioning information to the participant device 304. It is recognized that the GPS module 314 could alternatively be another type of positioning device 244 known in the art.

The ETA agent 312 may be an application executing on the participant device 304. Alternatively, the ETA agent 312 may reside as instructions and/or data in memory on a hardware device remote from the participant device 304. The ETA agent 312 is configured to receive (via network communication, e.g.) a starting time, a starting geospatial location, an ending geospatial location and travel information. The ETA agent 312 calculates the estimated time of arrival at the ending geospatial location when travelling from the starting geospatial location at the starting time. The ETA agent 312 may also be configured to retrieve information from a calendar application running on the participant device 304 to determine the ending time of any recent or upcoming scheduled meeting events in the calendar application. Thus, for example, if a starting time provided to the ETA agent 312 occurs before the ending time of an ongoing meeting or a meeting that is not occurring at the provided ending geospatial location, then the ETA agent 312 may consider the ending time of that meeting to be the starting time instead of the provided starting time. In this way the ETA agent 312 takes into consideration the possibility that a user of a participant device 304 may not be able to begin travelling to the ending geospatial location until after the end of a previously scheduled meeting. The travel information may, for example, represent traffic flow, weather conditions, or other factor affecting the travel speed or travel time between the starting geospatial location and the ending geospatial location. The travel information is used to estimate the time it would take to travel between the starting and ending geospatial locations. For example, the travel information may be used to estimate the time it would take to travel in a car between a starting street address and an ending street address. The travel information may, for example, be received from remote sources such as probes, sensors or radio signals, or using other methods that may be familiar to a person of ordinary skill in the art. The starting geospatial location may be the geospatial location of the participant device 304 as determined by the GPS module 314. By way of further example, the travel information could be received at the ETA agent 312 from a sensor. The sensor could be remote from the participant device 304 or the sensor could be embedded in the participant device. The sensor could, for example, be an accelerometer, a GPS or other proximity-based sensors familiar to persons of ordinary skill in the art.

The organizing device 302 may communicate messages 316 over the network to any number of the participant devices 304. Further, the organizing device 302 may broadcast messages 316 to all of the participant devices 304. Similarly, each of the participant devices 304 may communicate messages 318 over the network to the organizing device 302.

A Personal Information Manager (PIM) may be operating, executing or running on the organizing device 302. Similarly, a PIM may be operating, executing or running on each of the participant devices 304. The PIM may, for example, be a calendar application for maintaining, displaying and editing calendar appointments on a device. Calendar applications (and other PIM_{S}) are familiar to those of ordinary skill in the art.

The calendar application may be executing on the organizing device 302 and may be configured for arranging, maintaining and/or displaying meeting events. Meeting events may, for example, be coupled events in the calendar applications of two or more devices (such as a participant device 304 or an organizing device 302). The coupled meeting events may have the same start time and same location (i.e. representing a meeting time and location). These meeting events may be co-ordinated by a request (e.g. an email or other message) from one device to a second device along with a response (e.g. an email or other message indicating agreement) from the second device to the first device. The request may be a request to attend a meeting event. The response may comprise an acceptance of the meeting request or the response may be a message declining attendance at the meeting.

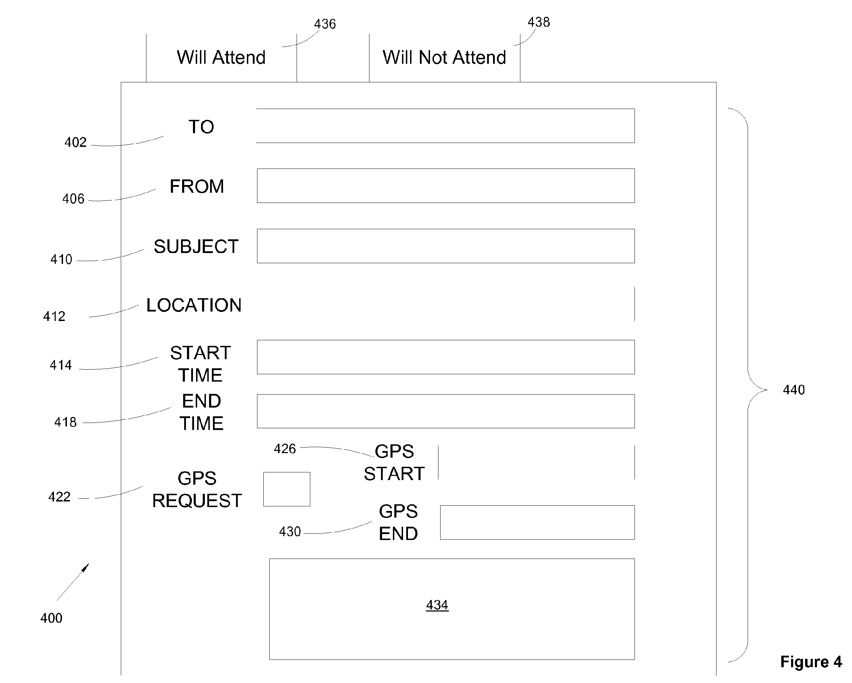

Figure 4 shows a block diagram of a meeting event request 400 that may, for example, be sent via email from the organizing device 302 to one or more participant devices 304. The meeting event request 400 is an invitation (e.g., from the organizing device 302 to at least one participant device 304) to attend a meeting event.

The meeting event request 400 may be displayed on the user interface 310 or display screen of the organizing device 302. A user of the organizing device 302 may access and edit the meeting event request 400 when the meeting event request 400 is displayed on the user interface 310, for example. The meeting event request 400 may have information fields 440 configured for storing and displaying information regarding the meeting event or the meeting event request 400. Before a meeting event request 400 is communicated to at least one participant, a user may edit the information fields 440 through the user interface 310. There may be, for example, a "to" field 402 for the identity of the recipient of the meeting event request 400. There may be a "from" field 406 for the identity of the meeting event request 400 sender (or meeting organizer). There may be a "location" field 412 for the geospatial location of the meeting. The "location" field 412 may be stored or filled with text indicating a geospatial location. This location text may be communicated to a remote server, for example, which geocodes the location text into geospatial coordinates. There may be a "subject" field 410 for the subject or title of the meeting event. There may be "start time" 414 and "end time" 418 fields indicating the starting and ending time of the meeting event. There may be a "GPS request" checkbox 422, a "GPS start" field 426 and a "GPS end" field 430 (each of which is described below). There may also be a display or comments field 434 for general comments or information regarding the meeting event or meeting event request 400. Comments may be entered through a user interface at the organizing device 302, for example, and these comments may be displayed in the comments field 434.

The meeting event request 400 may also have response buttons 436, 438. These response buttons 436, 438 may be configured for receiving a selection from the recipient of the meeting event request 400. For example, there may be a response button 436 requesting the receiver to confirm that they will attend the meeting event (i.e. the subject of the meeting event request 400); there may also be a response button 438 requesting the receiver to confirm that they will not be attending the meeting event. Thus, a recipient (e.g. a user of a participant device 304) may receive a meeting event request 400 from the organizing device 302 and may select a response button 436, 438. When (and if) the recipient selects a response button 436, 438, a message is communicated from the recipient (e.g. the participant device 304) to the organizing device 302 indicating the response button 436, 438 that was selected.

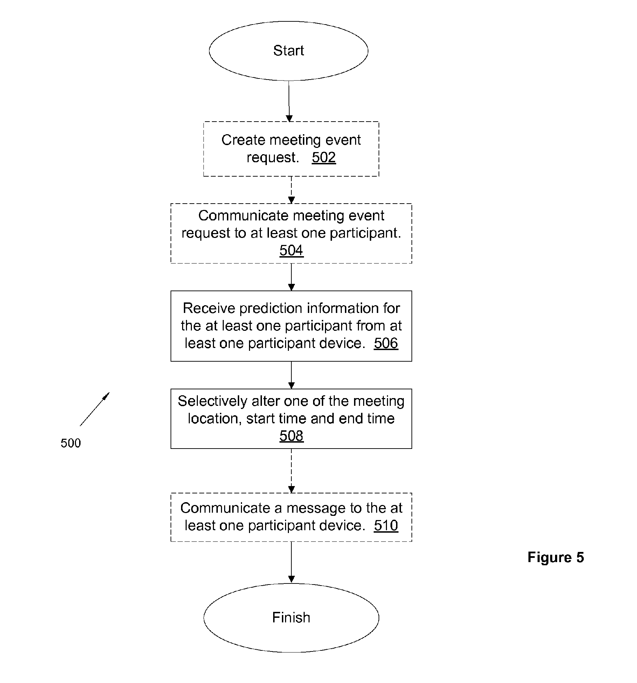

Figure 5 is a flow chart 500 showing a method of configuring a meeting event on an organizing device.

At step 502, a user of the organizing device 302 may create a meeting event request 400. The meeting event request 400 may be used to initiate the meeting event. The meeting event request 400 may have the entries in the start time 414 and end time 418 fields indicating the starting and ending time of the meeting event.

At step 504, the organizing device 302 may communicate the meeting event request 400, if one was created, to at least one participant device 304 over the network. Alternatively, the meeting event request 400 may be communicated over the network to the organizing device 302 by a participant device 304. Further, a participant device 304 may also communicate the meeting event request 400 to at least one other participant device 304. If a meeting event request 400 is communicated by the organizing device 302, at least one participant device 304 will receive the meeting event request 400. If there is a response button 436, 438 in the meeting event request 400, the participant device 304 may respond to the meeting event request 400 with a selection of a response button 436, 438. For example, the user of the participant device 304 may choose not to attend a meeting event as requested and may therefore select the response button 436, 438 that correlates to rejecting the meeting event request 400. The participant device 304 may then communicate a message (e.g. via email or another message) to the organizing device 302 indicating the response button 436, 438 selected (e.g. indicating that the participant will not be attending the meeting event as requested or indicating that the participant will be attending the meeting event as requested).

At step 506, the organizing device receives prediction information from the at least one participant device 304. The prediction information is for predicting the participant's attendance at the meeting event. For example, the prediction information may predict the time of arrival of a participant at the meeting event.

Prediction information may for example include the estimated time of arrival of the participant at the meeting event location or may include the geospatial location of the participant device 304 at a certain time. At least one participant device 304 may periodically send the prediction information to the organizing device 302. Further, the organizing device 302 may prompt or poll at least one participant device 304 for prediction information.

The prediction information may include the estimated time of arrival of the participant device 304 at the location of the meeting event. For example, the meeting event request 400 communicated to the participant device 304 may have had an entry for the location field 412 the meeting event. This location entry may be a geospatial location. The participant device 304 may use its ETA agent 312 to determine the estimated time of arrival at the meeting event given the current time, the current geospatial location of the participant device 304 (as determined by the GPS module 314) and the geospatial location of the meeting event as provided by the meeting event request 400. When the estimated time of arrival for a particular participant device 304 is received at the organizing device 302, the organizing device 302 may store the estimated time of arrival in its memory 306 and may also store the identification of the respective participant device 304 in memory 306. The identification of the respective participant device 304 may, for example, have been communicated to the organizing device 302 along with the estimated time of arrival.

The prediction information may otherwise or additionally include the geospatial location of the participant device 304. The duration of time between the GPS start time and the GPS end time for the participant device may be the time during which the participant device 304 may communicate its geospatial location to another device (such as the organizing device 302 or another participant device 304).

The meeting event request 400 communicated from the organizing device 302 to at least one participant device 304 may include an indication that the organizing device 302 is requesting the participant device's 304 geospatial location between the GPS start time and the GPS end time. The GPS start time may, for example, be indicated in the GPS start field 426. Similarly, the GPS end time may be indicated in the GPS end field 430. The participant device 304 may respond to the meeting event request 400 with an indication that the participant device 304 rejects the request 400 or accepts the request 400 (including the request to provide or make available its geospatial location). By way of further example, the meeting event request 400 may include a GPS response button (not shown) similar to response buttons 436, 438. A participant may select the GPS response button after receiving the meeting event request 400. The selection of the GPS response button may indicate that the participant agrees to make available the participant device's 304 geospatial location information to at least the organizing device 302 for at least the time period between the GPS start time and the GPS end time (as indicated in the meeting event request 400).

The participant device 304 may also have a "zone of privacy" defined as a particular geospatial region. If the participant device's 304 geospatial location is within the zone of privacy the participant device's 304 geospatial location may not be communicated to the organizing device 302 or to other participant devices 304 nor may the participant device's 304 geospatial location be accessible to other devices.

Further, the participant device 304 may accept the request to provide or make available its geospatial location but may not agree to the GPS start time or the GPS end time. The participant device 304 may, for example, communicate a new GPS start time and/or a new GPS end time to the organizing device 302.

After the GPS start time and before the GPS end time the geospatial location of the participant device 304 may be provided to or made available to the organizing device 302 (assuming that the participant device 304 communicated an indication to the organizing device 302 that the participant device 304 agrees to the GPS request). Thus, the organizing device 302 may periodically poll the participant device 304 for the participant device's 304 geospatial location. Alternatively, the participant device 304 may periodically communicate its geospatial location to the organizing device 302 during the time between the GPS start time and the GPS end time. Thus, the geospatial information of a participant device may be communicated to the organizing device 302 via polling or pushing and the polling or pushing may be at predetermined intervals. By way of further alternative, the participant device 304 may periodically broadcast its geospatial location to at least all other participating devices 304 and the organizing device.

It is recognized that there may be no GPS start time and/or no GPS end time thereby at least partially removing any temporal restrictions on the participant device 304 providing or making available its geospatial location to the organizing device 302.

It is also recognized that there may be a plurality or more than one participant devices 304 that have accepted a meeting event request 400 and a GPS request from an organizing device. Thus, when geospatial locations are communicated to the organizing device 302 or when the organizing device 302 obtains geospatial locations from participant devices 304, the organizing device 302 may associate each geospatial location with an identity of the respective participant device 304.

The real-time geospatial location of a participant device 304 may be provided or made available to the organizing device 302. The organizing device 304 may approximate the estimated time of arrival of a participant at a meeting event based on the real-time geospatial location of the participant device 302.

The geospatial locations received at the organizing device 302 may be stored in the organizing device's 302 memory. Similarly, any participant device 304 (or participant) identification information associated with a geospatial location that is received at the organizing device 302 may be stored in the organizing device's 302 memory.

The organizing device 302 may initiate an operation or may initiate a communication in response to the prediction information stored in its memory 306.

Further, the prediction information may be displayed on the user interface 310 of the organizing device 302. For example, estimated times of arrival of the participants at a meeting may be numerically or graphically depicted on the user interface 310. By way of further example, the geospatial location of the participant devices 304 may be displayed on the user interface 310 of the organizing device 302.

For example, the organizing device 302 may display on a map on a user interface 310 the geospatial location of the participant devices 304 of participants who agreed to the meeting event request 400. The geospatial locations of the participant devices 304 displayed on the map may be updated each time a new geospatial location for each participant device 304 is received at the organizing device 302. The geospatial locations of the participant devices 304 may thereby be displayed on the map in real-time.

The organizing device 302 may maintain in its memory 306 all of the estimated times of arrival for at least one of the participants (as received from the participant devices 304) to a particular meeting event.

At step 508, in response to receiving prediction information for the at least one meeting participant, one of the meeting event location, the meeting event start time and the meeting event end time may be selectively altered.

For example, a first participant may have an estimated time of arrival that is later than the commencement of the meeting and may have communicated this estimated time of arrival to the organizing device 302. The organizing device 302 may display the estimated time of arrival of each participant, noting that the first participant is estimated to arrive later than the commencement of the meeting. The user may then decide to postpone certain events within the meeting. For example, the user may decide to postpone ordering food for the meeting pending the arrival of that first participant who is estimated to be arriving late. By way of further example, the first participant may be scheduled as one of a number of speakers at the meeting event. The user may then decide to postpone that first participant's speaking time to a later time during the meeting event.

In a further example, the organizing device 302 may note that all of the meeting participants have an estimated time of arrival at the meeting location at least thirty minutes after the commencement of the meeting. The organizing device 302 may display a message to the user with this estimated time of arrival information, and the user may then decide to send a further meeting event request 400 to the participant devices 304 postponing the meeting start time for thirty minutes. Similarly, the organizing device 302 may note that all of the meeting participants have an estimated time of arrival at the meeting location at least thirty minutes before the commencement of the meeting. The organizing device 302 may display a message to the user with this estimated time of arrival information, and the user may then decide to send a replacement meeting event request 400 to the participant devices 304 changing the meeting start time to be thirty minutes sooner than it previously was.

At step 510, the organizing device 302 may optionally communicate a message to the at least one participant device 304 in response to receiving prediction information (e.g. estimated times of arrival) from the at least one participant device 304. For example, the organizing device 302 may communicate emails to the participant devices 304. Emails may comprise alerts/alarms, changes in the meeting start time or meeting end time, changes in the meeting attendees, messages indicating who may be late to the meeting, changes in the meeting location, etc. The message communicated to the at least one participant device 304 may comprise a replacement meeting event. For example, the replacement meeting event may be communicated in a new meeting event request 400.

By way of further example, a first participant may have an estimated time of arrival that is later than the commencement of the meeting and may have communicated this estimated time of arrival to the organizing device 302. The organizing device 302 may then prompt the user of the organizing device 302 to send an email or other message to all of the participants (i.e. by sending an email to all of the participant devices 304 over the network) noting that the first participant is estimated to arrive after the commencement of the meeting.

For example, if the prediction information is the geospatial location of the at least one participant device 304, and the participant device 304 appears to be travelling or moving in the wrong direction (e.g. in a direction heading away from the meeting event location), the organizing device 302 may communicate a message to the participant device 304 notifying the participant device 304 of the meeting event location and notifying the participant device 304 that the participant device 304 is travelling away from the meeting event location.

When one or more participants has an estimated time of arrival at the location of the meeting that occurs after the start time of the meeting, the organizing device 302 may prompt the user with an alert or message indicating that at least one participant is estimated to be late to the meeting. The organizing device 302 may further prompt the user to initiate an email or other message to the participants of the meeting. The user may then fill in the text of the email with a message (e.g. "Joe will be late to the meeting..."); or the user may then fill in a new meeting event request 400 to replace the current meeting event request 400 (i.e. the meeting that at least one participant is estimated to be late in attending). Alternatively, or in addition, the organizing device 302 may automatically fill in the text of the message (or may automatically fill in the new meeting event request 400).

Further, when one or more participants has an estimated time of arrival at the location of the meeting that occurs after the start time of the meeting, the organizing device 302 may communicate a reminder notification message to the one or more participant devices 304 advising them that they should begin travelling to the meeting location.

One or more embodiments have been described by way of example. It will be apparent to persons skilled in the art that a number of variations and modifications can be made without departing from the scope of what is defined in the claims.

## Claims

1. A computer implemented method of configuring a meeting event stored on an organizing device (302), the meeting event comprising a meeting event location, a meeting event start time and a meeting event end time, the method comprising:
receiving (506) prediction information for at least one meeting participant from at least one participant device (304), the prediction information for predicting attendance at the meeting event; and,
in response to receiving prediction information for the at least one meeting participant, selectively altering (508) one of the meeting event location, the meeting event start time and the meeting event end time.

2. The method of claim 1 further comprising, communicating (510) a message to the at least one participant device (304) in response to selectively altering one of the meeting event location, the meeting event start time and the meeting event end time, the message comprising communicating a replacement meeting event.

3. The method of one of claims 1 and 2 wherein the prediction information comprises an estimated time of arrival of the at least one participant device (304) at the location of a meeting event.

4. The method of one of claims claim 2 and 3, the step of communicating a message to the at least one participant device (304) comprises communicating a replacement meeting event request (400) having a replacement start time, the replacement start time of the replacement meeting event being later than the start time of the meeting event.

5. The method of claim 1 wherein the prediction information comprises the geospatial location of the at least one participant device (304).

6. The method of any one of claims 1 to 5 further comprising displaying the prediction information for the at least one meeting participant on a user interface (310).

7. The method of claim 6 wherein the step of displaying the prediction information for the at least one meeting participant on a user interface (310) comprises displaying a map comprising the received geospatial location of the at least one participant device (304).

8. A communication device (302) comprising a processor (308) and a memory (306) coupled thereto and a communication sub-system, coupled to the processor (308), for communicating with at least one participant device (304), the memory (306) storing a meeting event, the meeting event comprising a meeting event location, a meeting event start time and a meeting event end time, the memory storing instructions and data for execution by the processor (308) to configure the device (302) to:
receive prediction information for at least one participant from at least one participant device (304), the prediction information for predicting attendance at the meeting event; and
selectively alter one of the meeting event location, the meeting event start time and the meeting event end time in response to receiving prediction information for the least one participant.

9. The device of claim 8, the memory (306) storing instructions and data for execution by the processor (308) to further configure the device (302) to:
communicate a message to the at least one participant device (304) in response to selectively altering one of the meeting event location, the meeting event start time and the meeting event end time, the message comprising communicating a replacement meeting event.

10. The device of one of claims 8 and 9 wherein the prediction information comprises an estimated time of arrival of the at least one participant device (304) at the location of a meeting event.

11. The device of one of claims 9 and 10, wherein the message comprises a replacement meeting event request (400) having a replacement start time, the replacement start time of the replacement meeting event being later than the start time of the meeting event.

12. The device (302) of any one of claims 8 to 11 wherein the prediction information comprises the geospatial location of the at least one participant device (304).

13. The device (302) of any one of claims 8 to 12 wherein the memory (306) storing instructions and data for execution by the processor (308) to further configure the device (302) to
display the prediction information for the at least one participant on a user interface (310).

14. The device (302) of claim 13 wherein the prediction information for the at least one participant is displayed on a map on the user interface (310), the map comprising the received geospatial location of the at least one participant device (304).

15. A computer program product having computer readable code embodied therein, for execution by a processor (308) for configuring a communication device (302) communicate with at least one participant device (304), the computer program product comprising instructions and data for configuring a processor (308) of the communication device (302) to:
receive prediction information for at least on participant from at least one participant device (304), the prediction information for predicting attendance at a meeting event; and
in response to receiving prediction information for the least one participant, selectively alter the meeting event, the meeting event comprising a meeting event location, a meeting event start time and a meeting event end time.

## Amended claims

### Amended claims in accordance with Rule 137(2) EPC.

**1.** A computer implemented method of configuring a meeting event stored on an organizing device (302), the meeting event comprising a meeting event location, a meeting event start time and a meeting event end time, the method comprising:
receiving (506) prediction information at the organizing device for at least one meeting participant from at least one participant device (304), the prediction information comprising an estimated time of arrival of the at least one participant device (304) at the location of a meeting event, the estimated time of arrival based on real-time travel information; and,
in response to receiving prediction information for the at least one meeting participant, selectively altering (508) one of the meeting event location, the meeting event start time and the meeting event end time.

**2.** The method of claim 1 further comprising, communicating (510) a message to the at least one participant device (304) in response to selectively altering one of the meeting event location, the meeting event start time and the meeting event end time, the message comprising communicating a replacement meeting event.

**3.** The method of claim 2, the step of communicating a message to the at least one participant device (304) comprises communicating a replacement meeting event request (400) having a replacement start time, the replacement start time of the replacement meeting event being later than the start time of the meeting event.

**4.** The method of claim 1 wherein the prediction information comprises the geospatial location of the at least one participant device (304).

**5.** The method of any one of claims 1 to 4 further comprising displaying the prediction information for the at least one meeting participant on a user interface (310).

**6.** The method of claim 5 wherein the step of displaying the prediction information for the at least one meeting participant on a user interface (310) comprises displaying a map comprising the received geospatial location of the at least one participant device (304).

**7.** A communication device (302) comprising a processor (308) and a memory (306) coupled thereto and a communication sub-system, coupled to the processor (308), for communicating with at least one participant device (304), the memory (306) storing a meeting event, the meeting event comprising a meeting event location, a meeting event start time and a meeting event end time, the memory storing instructions and data for execution by the processor (308) to configure the device (302) to:
receive prediction information for at least one participant from at least one participant device (304), the prediction information for predicting attendance at the meeting event; and
selectively alter one of the meeting event location, the meeting event start time and the meeting event end time in response to receiving prediction information comprising an estimated time of arrival of the at least one participant device (304) at the location of a meeting event, the estimated time of arrival based on real-time travel information.

**8.** The device of claim 7, the memory (306) storing instructions and data for execution by the processor (308) to further configure the device (302) to:
communicate a message to the at least one participant device (304) in response to selectively altering one of the meeting event location, the meeting event start time and the meeting event end time, the message comprising communicating a replacement meeting event.

**9.** The device of one of claims 7 and 8, wherein the message comprises a replacement meeting event request (400) having a replacement start time, the replacement start time of the replacement meeting event being later than the start time of the meeting event.

**10.** The device (302) of any one of claims 6 to 9 wherein the prediction information comprises the geospatial location of the at least one participant device (304).

**11.** The device (302) of any one of claims 6 to 10 wherein the memory (306) storing instructions and data for execution by the processor (308) to further configure the device (302) to
display the prediction information for the at least one participant on a user interface (310).

**12.** The device (302) of claim 11 wherein the prediction information for the at least one participant is displayed on a map on the user interface (310), the map comprising the received geospatial location of the at least one participant device (304).

**13.** A computer program product having computer readable code embodied therein, for execution by a processor (308) for configuring a communication device (302) communicate with at least one participant device (304), the computer program product comprising instructions and data for configuring a processor (308) of the communication device (302) to:
receive prediction information for at least on participant from at least one participant device (304), the prediction information comprising an estimated time of arrival of the at least one participant device (304) at the location of a meeting event, the estimated time of arrival based on real-time travel information; and
in response to receiving prediction information for the least one participant, selectively alter the meeting event, the meeting event comprising a meeting event location, a meeting event start time and a meeting event end time.
